# EUROPEAN PATENT APPLICATION

(11) **EP 4 421 725 A1**
(43) Date of publication of application: **28.08.2024**
(21) Application number: 24155203.3
(22) Date of filing: 01.02.2024
(51) Int. Cl.: G06Q 40/04, G06Q 40/06, G06F 40/35, G06F 3/16, H04L 51/02

(54) **SYSTEM FOR SUPPORTING AND EXECUTING INVESTMENTS IN FINANCIAL INSTRUMENTS AND SERVICES, PRODUCTS AND INVESTMENTS OF ANY TYPE IN SECURITIES, REAL ESTATE, MONEY AND RELATED TO CRYPTOCURRENCIES**

(30) Priority: 22.02.2023 IT 202300003027
(71) Applicant: Mayak Games and Solutions OÜ, 10117 Tallinn (EE)
(72) Inventor: LIONETTI, Giovanni, Roma (RM) (IT)
(74) Representative: Fiammenghi, Eva

(57) **Abstract**

System for supporting and executing investments in financial instruments and services, products and investments of any type, securities, real estate, money and related to cryptocurrencies wherein which a device interacts vocally with the user (100), via a loudspeaker (101) , a microphone (102), a connection to the internet (104) and a calculation processor (103) which allows the execution of a virtual communication agent adapted to process, using machine learning algorithms, some significant parameters which could lead the user to an incorrect execution of financial transactions.

## Description

### Field of the invention

The present invention relates to the field of virtual assistance in order to create digital support in market analysis and in the choice and execution of financial operations, investments and savings operations in the financial market and in the new world of cryptocurrencies.

### Prior art

Artificial intelligence can be put at the service of business in multiple fields: text and image recognition, document research and knowledge and data management, process automation, virtual assistants and much more. The benefits brought by AI to companies are evident, from the reduction of costs and times to the greater efficiency of operators, as well as greater user satisfaction. AI technology has also taken hold in the financial sector, a virtual assistant can, for example, quickly and easily access and provide all the information contained in the documents relating to the financing conditions, or when the user accesses his/her reserved area he/she will be able to request information to the virtual assistant about his/her portfolio or possible investments. There are different types of virtual assistance as in patent EP3321928A1 where systems and processes for selective processing and response to a user's voice input are provided. The user's voice input is recorded by identifying its start and end points and it is possible to determine whether this input is intended for a virtual assistant or not based on contextual information, the determination can be made using a rule-based system or a probabilistic system. If the voice input is intended for the virtual assistant, the message will be processed and an appropriate response can be generated by the virtual assistant. Patent WO2008016931A2 instead describes a system for implementing risk classification products. Instead of codifying the attributes of a risk classification scheme, which requires the assistance of an operator specializing in modifications, adjustments or new products, a set of modular tools is created that assist non-specialist users in the on-the-fly generation and implementation of risk assessment products. Patent WO2019172910A1 focuses instead on Sentiment Analysis, where a computing device comprising a processing resource and a memory resource can process a digital image of a subject. The process proceeds step by step: an analysis of the facial features is first carried out to determine the identity of the subject, then a sentiment analysis is carried out which, when crossed with the facial analysis and the identity of the subject, allows the sentiment level of the subject to be defined and to be visualized via a display. In this patent, the system for supporting and executing investments in financial instruments combines and directs in a specific area, that of the financial market, a whole series of artificial intelligence technologies to create a real virtual financial assistant, which is not only able to interact and converse with the user, but is able to personalize the interaction in such a way as to be able to automatically suggest the financial choices of the user in front of him/her, to analyze the risk, to notify any impulsive choices not profitable for the subject, constantly monitor and visualize the performance of the traditional market and cryptocurrencies, to the point of automatically carrying out entire online financial operations. There is no doubt, therefore, that these solutions only partially address the critical issues set out so far.

### Description of the invention

The present invention aims to create a system for supporting and executing financial investments which is capable not only of assisting the user in choosing the financial operations to undertake, providing him/her with a whole series of useful information, through an accurate analysis of the performance of the financial market in real time, but also to automatically execute financial operations online, also in the cryptocurrency market, managing the user's consent/dissent and interacting with the same through the creation of a virtual assistant. In fact, this system exploits machine learning technology for natural language processing with the aim of making the virtual financial assistant capable of conversing and assisting the user in the delicate financial operations he/she wishes to carry out. Communication is intrinsic to humans, and extending it to computers is a natural step, in this way the use of advanced technologies is allowed without necessarily knowing the mechanisms and specific infrastructures, in fact users do not want to know how a virtual assistant achieves requested solution and it is precisely due to the need for speed and simplicity that they are not required to know what the mechanisms underlying the solution to the presented need are. This makes conversational computing very attractive in various work and non-work environments, facilitating better and more productive use of technology. Conversational AI uses a combination of services such as natural language understanding and dialogue management to make interaction between user and machine possible: it is based on Empathy Engine artificial intelligence technology, an empathy engine that provides relevant information and answers questions in real time by practicing active listening at scale, analyzes data, directs conversations to a human when appropriate, and cultivates trusting relationships to improve ongoing communication. Users demand high customization from virtual assistants, which can be possible by virtue of a series of interactions with the user and access to information that they can acquire from a database. The target user of this patent are people interested in financial instruments and with a strong passion for the complex crypto world, but who need guidance; people who want to gain experience in the financial world but who do not have the right technological tools to stay up to date, or people who do not have great experience with technology and who therefore need a simple, intuitive and reliable technological tool. The central element of the financial investment execution support system is a calculation processor that creates a virtual conversation agent capable of perceiving the user's emotions, conversing with him/her to choose investments, monitoring financial investments, acting on behalf of the user, proactively providing the latest news on the financial market and the world of cryptocurrencies and finding the information the user needs. Furthermore, this software, through the provision of personalized questions, processes with the data received a specific and unique profile of the user based on the user's interests and preferences, thus learning to know him/her and then helping him/her in the financial choices he/she will have to make. This virtual personal advisor, through machine learning algorithms for natural language processing, can therefore hold a conversation with the user, interacting via text or voice messages. In fact, this financial support system is accompanied by a voice interaction device composed of a microphone, a speaker and an Internet connection. The virtual assistant is developed on the financial needs of each user, performs a constant analysis of the market and identifies the best proposals on the same for the user, promptly carries out operations upon command and is able to develop predictive analyzes on financial operations. Thanks to advanced algorithms, the virtual assistant is able to detect and classify the user's levels of propensity for financial risk, for example analyzing historical data on previous investments, cataloging them by type, return and riskiness. This system is also able to detect the user's emotional sentiment before carrying out financial transactions. The calculation processor uses Sentiment Analysis which, through an activity that focuses on analyzing and listening to the web, is able to understand what users say, think and exchange with the surrounding world. Sentiment Analysis also focuses on what concerns the activity of competitors or other users who carry out similar financial activities. The fields of investigation of this type of analysis are undoubtedly Social Networks, these networks allow continuous interaction between users, as well as a continuous exchange of points of view. Sentiment Analysis therefore starts from these main platforms to understand the feelings and opinions circulating online, selecting and highlighting the best financial instruments and companies based on the ethical preferences that the user has expressed on the internet and in history. Through this tool, this system can also detect and signal, for example, a degree of impulsiveness in the tone of voice and in the user's conversation recorded on the microphone, issuing an alarm notification, before proceeding with any type of financial transaction. Through the analysis and processing of the user's personal data, the financial instruments support system can perform automated financial operations online, including on the new digital and cryptocurrency market, optimizing the level of risk extracted from the classification of the user's intentions obtained from Sentiment Analysis data. This system is equipped with an additional accelerated calculation processor, such as a GPU (Graphic Processing Unit), a graphics processing unit which has the purpose of accelerating the creation of images in a frame buffer, intended for the output of a display device, and an SSD (Solid State Drive), a solid state memory unit that has the ability to store a large amount of data in a non-volatile manner, without using mechanical parts, as traditional hard disks do. This system is provided with a high capacity and high voltage battery which is controlled by the central calculation processor and the additional software supplied. Financial operations are risky and delicate processes, for this reason the security issue is very important for users as they entrust sensitive data to digital agents that they cannot control and this must be guaranteed at every moment of the choice and execution process. In this regard, the present system is provided, alongside the voice interaction device already described, with a biometric reader which is capable of uniquely authenticating the user before carrying out financial transactions with an amount higher than a pre-established threshold. The biometric reader can, for example, recognize the fingerprint or scan the iris of the user's eye in a specific and unique way, guaranteeing their identity. A wall-mounted touchscreen allows the user to view a series of information in a simple, effective and quick way, such as the performance of his/her financial portfolio and financial instruments, the choices made by other related users selected by the user him/herself, and a series of notifications updated in real time useful for making choices regarding financial operations to be carried out. The advantages offered by the present invention are therefore evident in the light of the description presented thus far and will be even clearer thanks to the attached figures and the related detailed description.

The advantages offered by the present invention are evident in the light of the description presented thus far and will be even clearer thanks to the attached figure and the related detailed description.

### Description of the figures

The invention will hereinafter be described in a preferred embodiment thereof by way of non-limiting example with the aid of the accompanying figure, in which:

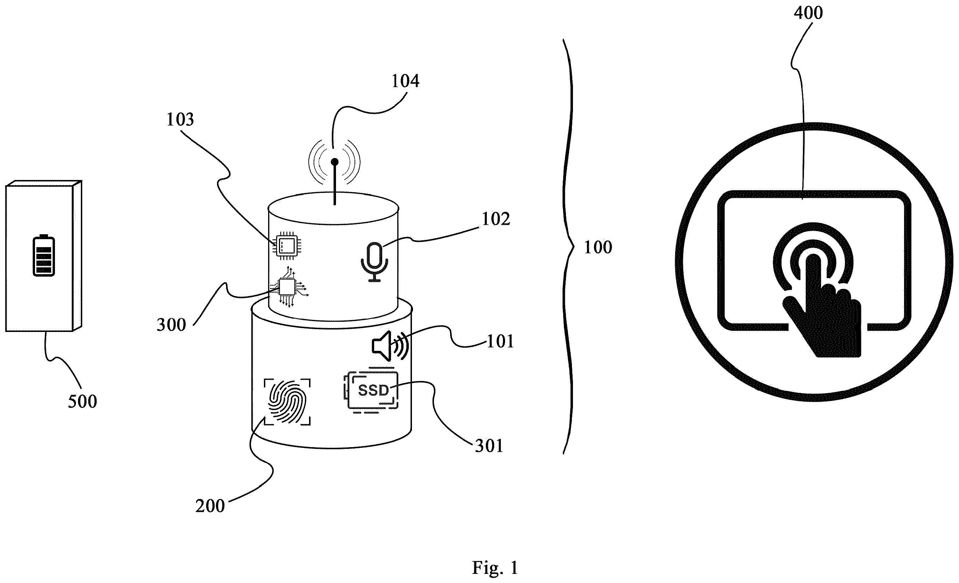

- FIGURE 1 shows the main elements that constitute the present invention. The image illustrates a device for voice interaction with the user 100, which is composed of a plurality of modules such as: a speaker 101, a microphone 102, an internet connection 104 and a calculation processor 103 adapted to execute a virtual conversation agent for communicating with the user, to perform automated online financial operations and to control a high-capacity and high-voltage battery 500 in order to optimize the consumption costs of the entire system. The figure also illustrates a biometric reader 200, integrated with said voice interaction device 100, adapted to guarantee user authentication in delicate financial transactions. The present invention also includes an accelerated computing processor 300 and an SSD hard disk 301. Finally, to ensure a clear view of one's own financial portfolio, the system includes a wall-mounted touchscreen 400 that allows the user to monitor these features.

### Detailed description of the invention

The present invention will now be described purely by way of non-limiting or binding example with the aid of the figure, which illustrates an embodiment relative to the present inventive concept.

With reference to FIG. 1, the main components of said system for the support and execution of investments in financial instruments is illustrated. Said system has a device for voice interaction with the user 100 characterized by a speaker 101, a microphone 102, an internet connection and a calculation processor 103 which, in addition to executing a virtual conversation agent and communicating with the user, is adapted to classify one's levels of propensity for financial risk using deep learning algorithms by detecting signals of impulsivity in the tone of voice. In order to secure the most delicate financial transactions with an amount higher than a pre-established threshold, the present system provides a biometric reader 200 integrated with said voice interaction device 100 by way of non-limiting example, a fingerprint reader for the user authentication. Furthermore, said device 100 comprises an accelerated computing processor 300 and an SSD hard disk 301 of suitable size. The invention also provides a touchscreen device adapted to allow the user to view both his/her own financial portfolio and the financial choices of a group of selected friends. Finally, to ensure the optimization of the consumption costs of the system, the latter is provided with a high capacity and high voltage battery 500 controlled by said processor 103 and accompanying software. Finally, it is clear that modifications, additions or variations that are obvious to a person skilled in the art can be made to the invention described so far, without thereby departing from the scope of protection provided by the appended claims.

## Claims

1. Support and execution system for investments in financial instruments and services, products and investments of any type in securities, real estate, money and cryptocurrencies, **characterized in that** it comprises a voice interaction device with the user (100) composed of at least: a speaker (101), a microphone (102), an internet connection (104), a calculation processor (103) adapted to execute a virtual conversation agent adapted to communicate with the user and to classify, through machine learning algorithms for natural language processing, at least: its levels of propensity to financial risk, its emotional sentiment before carrying out financial operations, detecting and reporting, before proceeding, impulsivity signals in the tone of the voice and conversation, the best financial instruments and companies based on the ethical preferences expressed by the user; said processor (103) also being adapted to execute automated financial operations online, also in the cryptocurrency market, optimizing the risk extracted after said classification of the user's intentions.

2. Support and execution system for investments in financial instruments and services, products and investments of any type in securities, real estate, money and cryptocurrencies, **characterized in that** it comprises, integrated into said voice interaction device (100), a biometric reader (200), such as by way of non-limiting example a fingerprint reader, adapted to authenticate the user before carrying out financial transactions with an amount exceeding a pre-established threshold.

3. Support and execution system for investments in financial instruments and services, products and investments of any type in securities, real estate, money and cryptocurrencies, **characterized in that** it comprises an accelerated calculation processor (300), such as for example GPU and a SSD hard disk (301) of adequate size, adapted to allow the software supplied with said device (100) to carry out staking operations for higher yields.

4. Support and execution system for investments in financial instruments and services, products and investments of any type in securities, real estate, money and cryptocurrencies, **characterized in that** it comprises a wall touchscreen (400) adapted to allow the display of information on one's own financial portfolio and at the same time to view the financial choices of a group of friends selected by the user.

5. Support and execution system for investments in financial instruments and services, products and investments of any type in securities, real estate, money and cryptocurrencies, **characterized in that** it comprises a battery (500) with high capacity and voltage, controlled by said processor (103) and accompanying software, adapted to exploit the price differences of the energy imported into the user's home to optimize the system's consumption costs.
